# EUROPEAN PATENT APPLICATION

(11) **EP 4 756 518 A1**
(43) Date of publication of application: **10.06.2026**
(21) Application number: 24847782.0
(22) Date of filing: 07.06.2024
(51) Int. Cl.: G02C 5/00, G02C 5/14

(54) **GLASSES FRAME HAVING CONCEALED LOCKING BODIES**

(30) Priority: 28.07.2023 CN 202322020724 U
(71) Applicant: Jin, Hui, Wenzhou, Zhejiang 325011 (CN)
(72) Inventor: Jin, Hui, Wenzhou, Zhejiang 325011 (CN)
(74) Representative: Bobbert & Partner Patentanwälte PartmbB
(86) International application number: PCT/CN2024/098282
(87) International publication number: WO 2025/025819

(57) **Abstract**

A glasses frame having concealed locking bodies includes a glasses frame body and locking body assemblies connected thereto, wherein the glasses frame body includes thick frame body portions and a thin frame body portion for wrapping glasses lenses; the thick frame body portions each have a width greater than that of the thin frame body portion; the thin frame body portion is provided with first cutouts by which the glasses frame body is divided into two openable portions; individual locking bodies in each of the locking body assemblies are mated to lock the two openable portions of the glasses frame body at positions where locking sections are formed; the locking sections and the first cutouts are staggered such that the locking body assemblies are disposed at the thick frame body portions; and the locking body assemblies are arranged on a side facing a wearer and each have a width at each locking section that is not greater than the width of the corresponding thick frame body portion. The present invention has the advantageous effect of addressing the issue of exposed locking bodies outside the glasses frame after wearing, without deliberately altering the original form of the glasses frame, making glasses products more concise and enhancing the aesthetic appeal of products.

## Description

### BACKGROUND OF THE INVENTION

### 1. Technical Field

The present invention relates to the field of glasses, and in particular, to a glasses frame having concealed locking bodies.

### 2. Description of Related Art

Glasses are indispensable corrective tools and dressing accessories in modern life. After a long development process, the glasses are typically designed to be more concise, i.e., minimizing the width of glasses frame, in order to ensure the aesthetic appeal of glasses products. At present, metal rimmed glasses on the market have a glasses frame that generally includes a portion with a thin frame body (i.e., thin frame body portion, which generally serves to wrap lenses), and further includes thick frame body portions at individual connecting portions of the frame body. During the process of fitting the lenses, in order to facilitate processing and achieve more reasonable structural arrangement, the thin frame body portion at both sides of the glasses frame is generally cut into two openable portions, i.e., upper and lower portions, with cutouts typically disposed below connecting portions between the glasses frame and temples, and locking bodies are arranged at the cutouts of the upper and lower portions, respectively, and are provided with matching threaded holes. After the glasses frame is opened for fitting each lens, a fastener is inserted into the threaded holes in the two locking bodies to lock and fix the lens in the glasses frame.

For example, Chinese patent document CN212781515U discloses glasses, including a cutoff glasses frame. An end of a cutoff section of the glasses frame extends outwards to form a first clamping jaw; the other end of the cutoff section of the glasses frame extends outwards to form a second clamping jaw (the first and second clamping jaws are equivalent to the locking bodies mentioned previously); and the first and second clamping jaws are provided therein with first and second threaded holes, respectively, enabling fixation of the glasses frame by threading fasteners through the first and second clamping jaws.

In the glasses in the above solution, the width of the locking bodies cannot be reduced in order to ensure the fixation stability of the glasses frame and the mechanical strength of the fasteners threaded through the locking bodies. As a result, the locking bodies protrude outwards from the glasses frame to increase the width of the glasses frame, leading to reduced aesthetic appeal of the glasses since the locking bodies are visually noticeable to other people when a wearer wears the glasses.

For another example, Chinese patent document CN204705775U discloses glasses, including a glasses frame, temples, end pieces and locking blocks. The end pieces are equivalent to the connecting portions mentioned previously and serve to connect the temples and the glasses frame; the locking blocks are equivalent to the locking bodies mentioned previously; the glasses frame is provided with openings that divide the glasses frame into upper and lower glasses frames, and the openings are equivalent to the above cutouts, by means of which lenses are fitted in the glasses frame by means of the cutouts; the locking bodies are provided with first and second through holes; the upper glasses frame is detachably fixed to the locking bodies by threading fasteners through the first through holes; and the lower glasses frame is fixedly connected to the locking bodies by inserting rivets into the second through holes.

According to the above solution, the thin frame body portion at both lateral sides of the glasses frame is still cut off, based on which the locking bodies are each provided as a part of the corresponding connecting portion, and the fasteners and rivets that are not longer than the locking bodies are threaded to enable concealed arrangement of the locking bodies. However, components are additionally added to the glasses frame in the above solution, which changes the structure of the glasses frame while increasing the width of glasses frame, and reduces the aesthetic appeal of the glasses.

### BRIEF SUMMARY OF THE INVENTION

In view of the defects in the prior art, the present invention provides a glasses frame having concealed locking bodies by hiding locking body assemblies behind the glasses frame without changing the original structure of the glasses frame.

To achieve the above object, the technical solution of the present invention is as follows: a glasses frame having concealed locking bodies includes a glasses frame body and locking body assemblies connected thereto, wherein the glasses frame body includes thick frame body portions and a thin frame body portion for wrapping lenses; the thick frame body portions each have a width greater than that of the thin frame body portion; the thin frame body portion is provided with first cutouts by which the glasses frame body is divided into two openable portions; individual locking bodies in each of the locking body assemblies are mated to lock the two openable portions of the glasses frame body at positions where locking sections are formed; the locking sections and the first cutouts are staggered such that the locking body assemblies are disposed at the thick frame body portions; and the locking body assemblies are arranged on a side facing a wearer and each have a width at each locking section that is not greater than the width of the corresponding thick frame body portion.

The present invention has the following advantageous effects: according to the above solution, the locking body assemblies are arranged within the thick frame body portions existing in the original structure of the glasses frame and towards a wearer, such that the locking body assemblies are not exposed outside the glasses frame when a glasses product resulting from the above solution is worn; the thick frame body portions mentioned in the above solution are generally connecting portions on the glasses frame for connecting the glasses temples, and may also be bridges or upper and lower beams of the glasses frame that exist in the original glass frame. Furthermore, the locking body assemblies and the glasses frame are connected in a fixed manner, which may include integrated casting and molding with a glasses frame body during its manufacturing process, or for example direct welding or additional component welding or other fixed manners taken after the glasses frame body is processed. In addition, the locking body assemblies and the glasses frame may also be connected via for example snap joint or threaded locking or other detachably manners. Depending the connecting method between the locking body assemblies and the glasses frame, the locking sections may be latching points between individual locking bodies, or locking surfaces formed by splicing individual locking bodies, or locking holes directly arranged in the glasses frame body. Hence, a glasses product resulting from the above solution is aesthetically more appealing. More importantly, the above solution does not require any alternation to the original structure of the glasses frame, thereby achieving better applicability and higher diversity in the design of the glasses products obtained according to the above solution.

Further, the locking body assemblies are disposed on the glasses frame body to connect connecting portions of temples; the first cutouts are disposed below the connecting portions; each of the locking body assemblies includes a first locking body and a second locking body that are arranged on the two openable portions of the glasses frame body, respectively; a first connecting strip is arranged between the first locking body and the thin frame body portion; and the first connecting strip at the thin frame body portion has a width that is not greater than the width of the thin frame body portion.

The connecting portions at both sides of the glasses frame body to connect the temples are thick frame body portions in the glasses frame, and the locking body assemblies are arranged at the connecting portions, such that the locking body assemblies can be concealed behind the glasses frame while the width of each locking body assembly is ensured to guarantee the mechanical strength of the locking body assembly. Moreover, the first cutouts are disposed on the thin frame body portions at both sides of the glasses frame body, thereby facilitating the processing of the first cutouts. The first connecting strip arranged between each first locking body and the corresponding thin frame body portion can be considered as a first locking body or the extension of the glasses frame body, thereby positioning the first locking body within the connecting portion; and the width of the first connecting strip disposed on the thin frame body portion is configured to be not greater than the width of the thin frame body portion, such that the first connecting strip is not exposed outside the glasses frame body.

Further, the first locking body and the second locking body are correspondingly provided with spliceable end surfaces, and the locking section is a spliced surface formed by splicing the first locking body and the second locking body.

The opposing end surfaces of the first and second locking bodies can be spliced and combined, that is, an end surface formed by splicing the first and second locking bodies is a locking section, and the locking section, i.e., the spliced surface, may be a special-shaped surface. In this way, a plurality of fixed surfaces is formed after the two openable portions of the glasses frame body are locked, such that the two openable portions of the glasses frame body are connected at higher stability after being locked. Alternatively, the locking section, i.e., the spliced surface, may also be a flat surface, such that the processing difficulty can be reduced. Moreover, since the locking section is still staggered with the corresponding first cutout, the locking section provided as the flat surface does not decrease the post-locking connecting stability of the two openable portions of the glasses frame body.

Further, the first connecting strip is fixedly connected to the first locking body and the thin frame body portion, respectively; an end of the first connecting strip fixedly connected to the first locking body is disposed between both end surfaces of the first locking body, and an end of the first connecting strip fixedly connected to the thin frame body portion is disposed outside the first locking body; the second locking body is provided with a second connecting strip; and the second connecting strip and the first connecting strip are arranged flush at a spliced surface.

The first connecting strip and the second connecting strip are spliced to form a spliced surface that can be staggered with the first cutout and the locking section, respectively, such that the post-locking connecting stability of the two openable portions of the glasses frame body is further enhanced by adding the spliced surface, thereby fixing the lenses in the glasses frame more stably. In addition, the spliced surface of the first connecting strip and the second connecting strip may also be flush with the locking section, i.e., the spliced surface formed by splicing the first locking body and the second locking body, thereby reducing processing difficulty and improving processing efficiency.

Further, the first connecting strip and the first locking body are connected by means of integrated molding; and the first connecting strip extends to the thin frame body portion from an end surface of the first locking body away from the second locking body and is fixedly connected to the thin frame body portion.

The first connecting strip is taken as a part of the first locking body, such that upon completion of the processing of the first locking body, it is sufficient to fixedly connect the first connecting strip and the thin frame body portion, thereby reducing processing difficulty and improving production efficiency.

Further, the first connecting strip is a part of the glasses frame body and extends towards the connecting portion from the first cutouts to present a shape of a lug boss, and the first locking body is fixedly connected onto a part of the lug boss disposed at the connecting portion.

According to the above solution, the first cutout is provided as a special-shaped cutout, such that after the first connecting strip spliceable with another openable portion of the glasses frame body is formed on the glasses frame body, and the first connecting strip extends towards the connecting section and is provided as a lug boss, the first locking body fixed to the first connecting strip can be positioned within the connecting section. Likewise, the fixed position of the first locking body is not limited, as long as the first locking body and the second locking body form the spliceable end surface. With the above arrangement, the first connecting strip is provided as a part of the glasses frame body by changing the cutting method for the first cutout, such that the glasses frame body is visually more concise, thereby further improving the aesthetic appeal.

Further, the first locking body and the second locking body are provided with interconnectable locking holes, respectively, and each of the locking body assemblies further includes a third lock, which is mated with the locking holes to lock the two openable portions of the glasses frame.

In the above solution, the interconnected locking holes may be pin holes or threaded holes, the third lock corresponding to this interconnected locking holes may be provided as a pin or fastener, and the mating between the interconnected locking holes and the third lock enables locking between the first locking body and the second locking body, i.e., achieving locking of the two openable portions of the glasses frame.

Further, the first locking body and the second locking body are mated to lock the two openable portions of the glasses frame by means of latching, and the locking section is a latching section formed by mating of the first locking body and the second locking body.

In addition to the method for fixing the first locking body and the second locking body by forming the spliced end surface, the first locking body and the second locking body may also be fixed by a latching method after the forms of the first and second locking bodies are changed. At this point, the locking section is a latching section that is formed by latching and fixing the first locking body and the second locking body. This latching section may be a latching point or surface, enabling more convenient disassembling and assembling of the two openable portions of the glasses frame body.

Further, the first connecting strip is a part of the first locking body, the first locking body further includes a locking segment at the connecting portion, the first connecting strip is fixed to the thin frame body portion, and the second locking body is surrounded by the locking segment after being mated with the first locking body.

The first locking body causes a locking segment to be positioned at the connecting portion by means of the first connecting strip. The locking segment and the connecting portion may be provided with interconnectable threaded holes. At this point, the second locking body is a fastener accordingly, and the locking section is a threaded surface formed by matching the first locking body and the second locking body. Likewise, the locking segment may also be provided as a hook, which is arranged around the locking hole. When the locking segment is in point contact with the second locking body, the locking section here is a latching point formed by matching the first locking body and the second locking body; and when the locking segment is in surface contact with the second locking body, the locking section here is a latching surface formed by matching the first locking body and the second locking body. A glasses product manufactured according to the above solution is more convenient for lens disassembly and assembly of the lenses, such that the subsequent repair procedures can be simplified.

### BRIEF DESCRIPTION OF THE SEVERAL VIEWS OF THE DRAWINGS

FIG. 1 shows an axonometric diagram of a glasses product according to the present invention;
FIG. 2 shows a partially side view of a locking body assembly according to Embodiment 1 of the present invention;
FIG. 3 shows a partially side view of a disassembled state according to Embodiment 1 of the present invention;
FIG. 4 shows a partially side view of a locking body assembly according to Embodiment 2 of the present invention;
FIG. 5 shows a partially side view of a disassembled state according to Embodiment 2 of the present invention;
FIG. 6 shows a partially side view of a locking body assembly according to Embodiment 3 of the present invention;
FIG. 7 shows a partially side view of a disassembled state according to Embodiment 3 of the present invention;
FIG. 8 shows a partially enlarged view of a locking body assembly according to Embodiment 4 of the present invention;
FIG. 9 shows a partial view of a disassembled state according to Embodiment 4 of the present invention; and
FIG. 10 shows a partially side view of a locking body assembly according to Embodiment 4 of the present invention.

### DETAILED DESCRIPTION OF THE INVENTION

### Embodiment 1

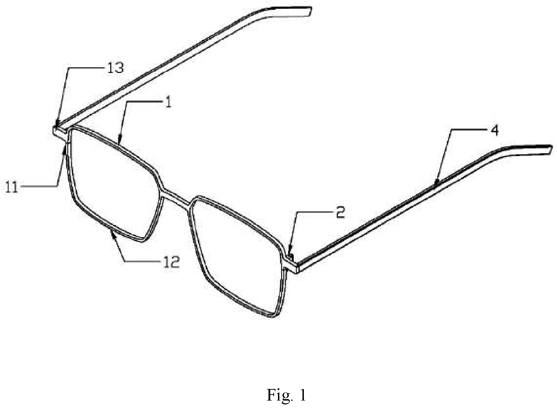

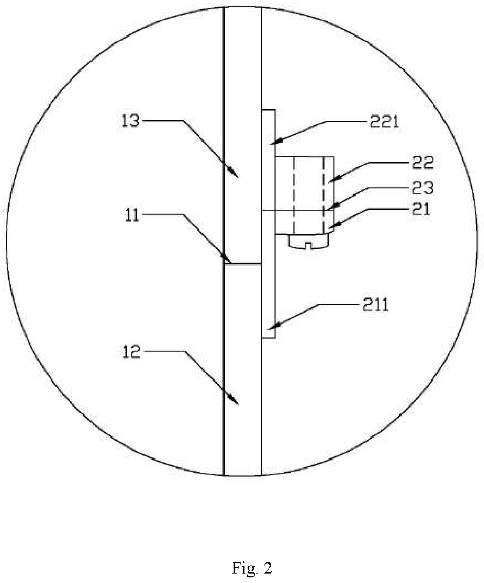

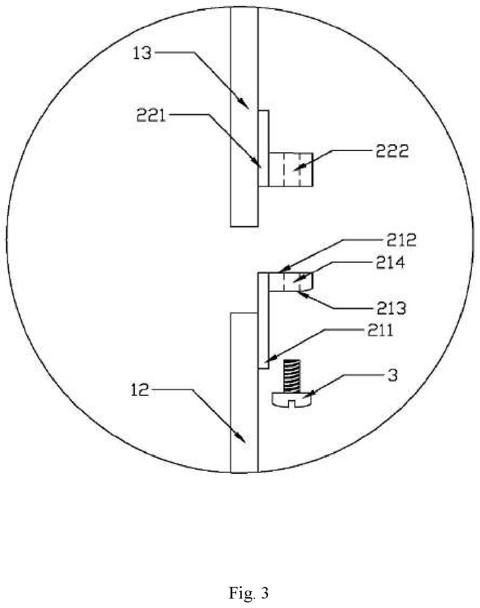

In Embodiment 1 of the present invention, a glasses frame having concealed locking bodies, as shown in FIGS. 1 to 3, includes: a glasses frame body 1 and locking body assemblies 2. The glasses frame body 1 includes a thin frame body portion 12 for wrapping lenses, and connecting portions disposed on the glasses frame body 1 for connecting temples 4; the connecting portions are thick frame body portions 13; the thin frame body portion 12 is provided with first cutouts 11 below the thick frame body portions 13; and the first cutouts 11 divide the glasses frame body 1 into two openable portions. The locking body assemblies 2 each include a first locking body 21 and a second locking body 22 that are disposed on the two openable portions of the glasses frame body 1, respectively. The first locking body 21 and the second locking body 22 are disposed on the corresponding thick frame body portion 13, and the first locking body 21 and/or the second locking body 22 disposed at the thick frame body portion 13 have/has a width that is not greater than the width of the thick frame body portion 13. The opposing end surfaces on the first locking body 21 and the second locking body 22 can be spliced and combined, and in this embodiment, a spliced surface formed by splicing the first locking body 21 and the second locking body 22 is a locking section 23 which is staggered with the first cutout 11.

The first locking body 21 is provided with a first connecting strip 211 that is welded and fixedly connected to the first locking body 21 and the thin frame body portion 12, respectively, and the part of the first connecting strip 211 disposed at the thin frame body portion 12 has a width that is not greater than the width of the thin frame body portion 12; and both end surfaces of the first locking body 21 include a first end surface 212 formed at the locking section 23 and a second end surface 213 corresponding to the first end surface 212, respectively. One end of the first locking body 21 is fixed between the first end surface 212 and the second end surface 213, and the other end of the first locking body is disposed outside the second end surface 213 and fixed to the thin frame body portion 12. With the above arrangement, the locking body assemblies 2 are concealed behind the thick frame body portions 13, i.e., the connecting portions, such that the locking body assemblies 2 are not exposed outside the glasses frame body 1 when the glasses frame is worn by a wearer.

In order to ensure the locking stability between the first locking body 21 and the second locking body 22, the second locking body 22 is provided with a second connecting strip 221 that is at the same height as the first connecting strip 211, and the opposing end surfaces on the first connecting strip 211 and the second connecting strip 221 are next to each other when the first locking body 21 and the second locking body 22 are locked.

In this embodiment, the first locking body 21 and the second locking body 22 are provided with a first threaded hole 214 and a second threaded hole 222, respectively; the first threaded hole 214 and the second threaded hole 222 are interconnectable locking holes; and the third lock 3 is provided as a fastener corresponding to the locking holes. The glasses frame body 1 is fixed by threading the third lock 3 through the first threaded hole 214 and the second threaded hole 222 in the first locking body 21 and the second locking body 22.

### Embodiment 2

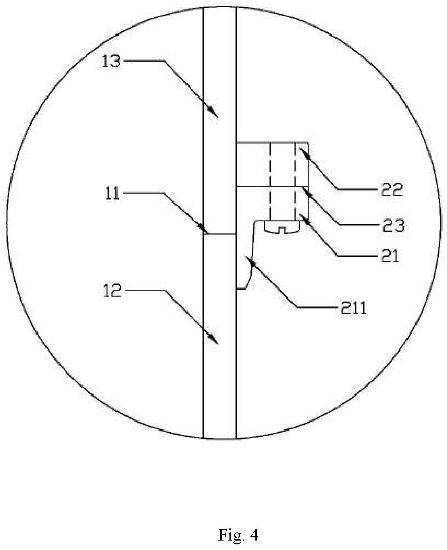

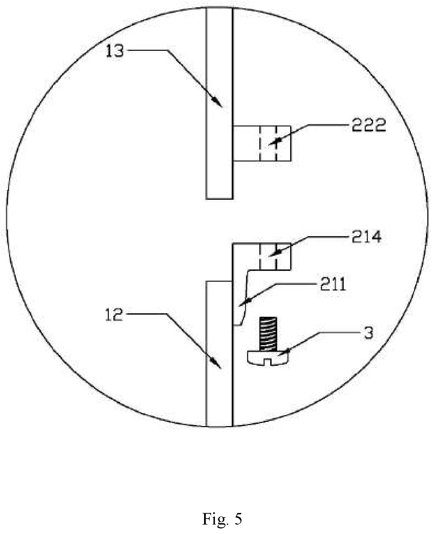

In Embodiment 2 of the present invention, a glasses frame having concealed locking bodies is as shown in FIGS. 4 to 5. Embodiment 2 differs from Embodiment 1 in that: the first connecting strip 211 and the first locking body 21 are fixedly connected by means of integrated molding; and the first connecting strip 211 extends to the thin frame body portion 12 from the end surface of the first locking body 21 away from the second locking body 22 and is fixed to the thin frame body portion 12.

### Embodiment 3

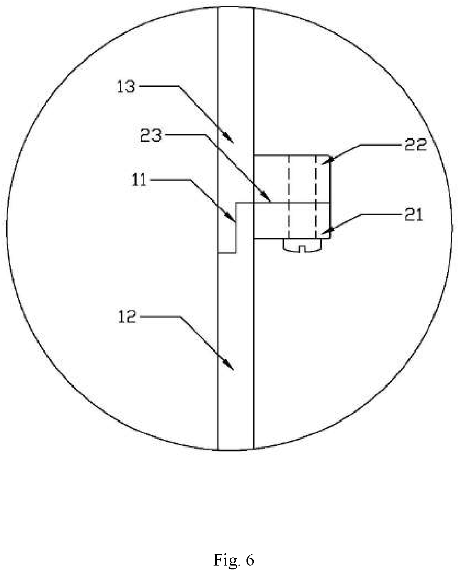

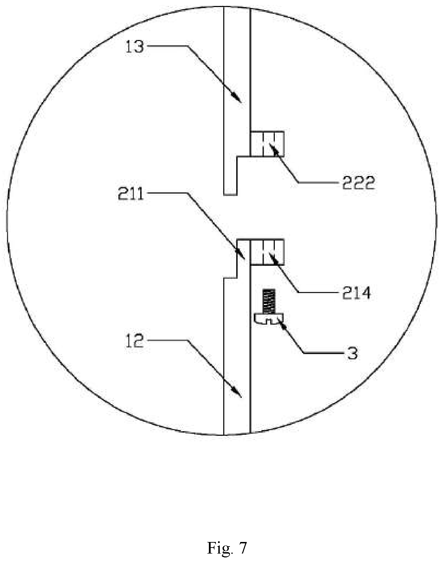

In Embodiment 3 of the present invention, a glasses frame having concealed locking bodies is as shown in FIGS. 6 and 7. Embodiment 3 differs from Embodiment 1 in that: the first cutout 11 on the glasses frame body 1 is a special-shaped cutout, by which the first connecting strip 211 extending from the first cutout 11 towards the thick frame body portion 13 is formed on the glasses frame body 1, and the first connecting strip 211 is provided as a lug boss. That is, the first connecting strip 211 in this embodiment is a part of the glasses frame body 1 to facilitate locking of the corresponding locking body assembly 2, and the first locking body 21 in this embodiment is arranged at the end of the first connecting strip 211 that is shaped as the lug boss.

### Embodiment 4

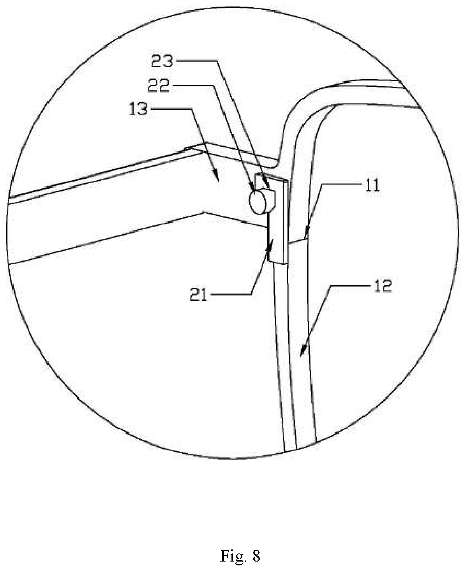

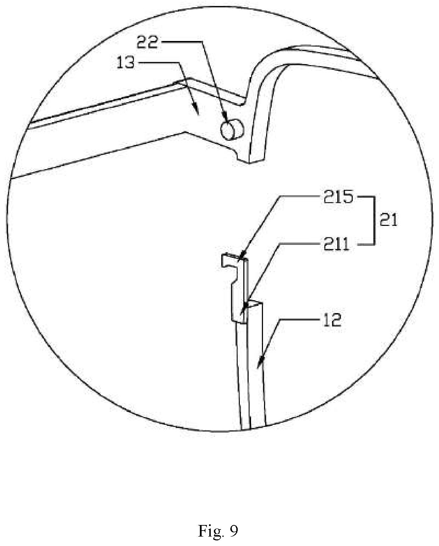

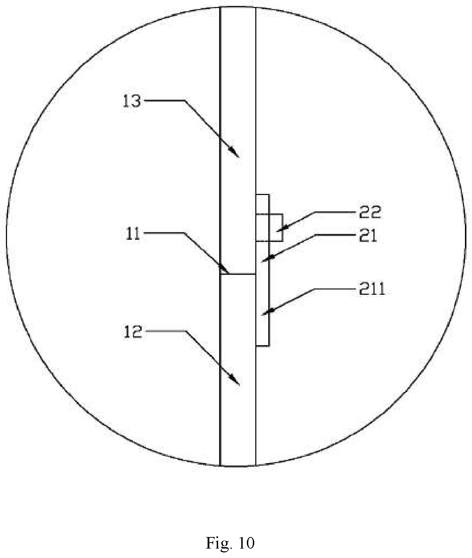

In Embodiment 4 of the present invention, a glasses frame having concealed locking bodies is as shown in FIGS. 8 to 10. Embodiment 4 differs from Embodiment 1 in that: the first locking body 21 and the second locking body 22 are fixed by a latching method. That is, the locking section 23 in this embodiment is a latching section formed by matching the lock 21 and the second locking body. In this embodiment, the first connecting strip 211 is a part of the first locking body 21, and the first connecting strip 211 is partially fixed to the thin frame body portion 12 and allows the first locking body 21 to be positioned at the corresponding thick frame body portion 13. The first locking body 21 further includes a hook-shaped locking segment 215; the second locking body 22 is arranged at the corresponding thick frame body portion 13 by a welding or inserting fixation method; the locking segment 215 of the first locking body 21 is arranged to surround the second locking body 22 after the first locking body 21 and the second locking body 22 are matched, such that the locking segment 215 and the second locking body 22 come into multi-point contact, thereby enabling stabler connection after the two openable portions of the glasses frame body 1 are locked by means of the locking body assemblies 2. Moreover, the fixation method in this embodiment enables more convenient disassembling and assembling of the two openable portions of the glasses frame body 1.

The embodiments above are merely specific embodiments of the present invention. Any general variations and substitutions made by those skilled in the art within the scope of the technical solutions of the present invention should be included within the protection scope of the present invention.

## Claims

1. A glasses frame having concealed locking bodies, comprising a glasses frame body and locking body assemblies connected thereto, wherein the glasses frame body comprises thick frame body portions and a thin frame body portion for wrapping lenses, the thick frame body portions each have a width greater than that of the thin frame body portion, the thin frame body portion is provided with first cutouts by which the glasses frame body is divided into two openable portions, individual locking bodies in each of the locking body assemblies are mated to lock the two openable portions of the glasses frame body at positions where locking sections are formed, and wherein the locking sections and the first cutouts are staggered such that the locking body assemblies are disposed at the thick frame body portions, and the locking body assemblies are on a side facing a wearer and each have a width at each locking section that is not greater than the width of the corresponding thick frame body portion.

2. The glasses frame having concealed locking bodies according to claim 1, wherein the locking body assemblies are disposed on the glasses frame body to connect connecting portions of temples; the first cutouts are disposed below the connecting portions; each of the locking body assemblies comprises a first locking body and a second locking body that are arranged on the two openable portions of the glasses frame body, respectively; a first connecting strip is arranged between the first locking body and the thin frame body portion; and the first connecting strip at the thin frame body portion has a width that is not greater than the width of the thin frame body portion.

3. The glasses frame having concealed locking bodies according to claim 2, wherein the first locking body and the second locking body are correspondingly provided with spliceable end surfaces, and the locking section is a spliced surface formed by splicing the first locking body and the second locking body.

4. The glasses frame having concealed locking bodies according to claim 3, wherein the first connecting strip is fixedly connected to the first locking body and the thin frame body portion, respectively; an end of the first connecting strip fixedly connected to the first locking body is disposed between both end surfaces of the first locking body, and an end of the first connecting strip fixedly connected to the thin frame body portion is disposed outside the first locking body; the second locking body is provided with a second connecting strip; and the second connecting strip and the first connecting strip are arranged flush at a spliced surface.

5. The glasses frame having concealed locking bodies according to claim 3, wherein the first connecting strip and the first locking body are connected by means of integrated molding; and the first connecting strip extends to the thin frame body portion from an end surface of the first locking body away from the second locking body and is fixedly connected to the thin frame body portion.

6. The glasses frame having concealed locking bodies according to claim 3, wherein the first connecting strip is a part of the glasses frame body and extends towards the connecting portion from the first cutout to present a shape of a lug boss, and the first locking body is fixedly connected onto a part of the lug boss disposed at the connecting portion.

7. The glasses frame having concealed locking bodies according to any one of claims 3 to 6, wherein the first locking body and the second locking body are provided with interconnectable locking holes, respectively, and each of the locking body assemblies further comprises a third lock, which is mated with the locking holes to lock the two openable portions of the glasses frame.

8. The glasses frame having concealed locking bodies according to claim 2, wherein the first locking body and the second locking body are mated to lock the two openable portions of the glasses frame by means of latching, and the locking section is a latching section formed by mating of the first locking body and the second locking body.

9. The glasses frame having concealed locking bodies according to claim 8, wherein the first connecting strip is a part of the first locking body, the first locking body further comprises a locking segment at the connecting portion, the first connecting strip is fixed to the thin frame body portion, and the second locking body is surrounded by the locking segment after being mated with the first locking body.
